# EUROPEAN PATENT SPECIFICATION

(11) **EP 3 636 682 B1**
(45) Date of publication and mention of the grant of the patent: **06.05.2026**
(21) Application number: 18813542.0
(22) Date of filing: 29.05.2018
(51) Int. Cl.: C08F 214/26, C08F 6/02, C08F 6/22, C08F 6/14

(54) **FLUORINE-CONTAINING ELASTIC COPOLYMER AND PRODUCTION METHOD THEREFOR**
FLUORHALTIGES ELASTISCHES COPOLYMER UND HERSTELLUNGSVERFAHREN DAFÜR
COPOLYMÈRE ÉLASTIQUE CONTENANT DU FLUOR ET SON PROCÉDÉ DE PRODUCTION

(30) Priority: 05.06.2017 JP 2017110809
(43) Date of publication of application: 15.04.2020
(73) Proprietor: AGC Inc., Chiyoda-ku Tokyo 100-8405 (JP)
(72) Inventor: HATTORI, Yukiko, Tokyo 100-8405 (JP); KOSE, Takehiro, Tokyo 100-8405 (JP)
(74) Representative: Müller-Boré & Partner Patentanwälte PartG mbB
(86) International application number: PCT/JP2018/020587
(87) International publication number: WO 2018/225586

(56) References cited:
- EP-A1- 2 383 302
- EP-A1- 3 378 896
- WO-A1-2015/008649
- WO-A1-2015/111729
- WO-A1-2017/086323
- WO-A1-99/50319
- JP-A- 2011 047 052
- JP-A- 2011 505 431
- JP-A- 2013 177 631
- JP-A- 2017 092 122

## Description

### TECHNICAL FIELD

The present invention relates to a method for producing a fluorinated elastic copolymer.

### BACKGROUND ART

A crosslinked rubber article obtained by crosslinking a fluorinated elastic copolymer is excellent in chemical resistance, solvent resistance, heat resistance, etc., and thus, is suitable as a sealing material for a semiconductor manufacturing apparatus to be used in harsh environments. The sealing material for a semiconductor manufacturing apparatus, is required not to release metal components which adversely affect semiconductor products, as far as possible. Thus, as the sealing material for a semiconductor manufacturing apparatus, it is necessary to use one having a small content of metal elements.

As the fluorinated elastic copolymer having a small content of metal elements, the following one has been proposed.

A fluorinated elastic copolymer obtained by obtaining a latex containing a fluorinated elastic copolymer by an emulsion polymerization method using no metal compound, coagulating the fluorinated elastic copolymer in the latex by using an acid containing no metal elements, and washing the coagulated fluorinated elastic copolymer with a water-insoluble solvent (Patent Document 1).

Patent Document 2 describes high purity perfluoroelastomer composites and a process to produce the same.

### PRIOR ART DOCUMENT

### PATENT DOCUMENT

Patent Document 1: WO 99/50319
Patent Document 2: JP 2013 177631 A

### DISCLOSURE OF INVENTION

### TECHNICAL PROBLEM

However, in Examples of Patent Document 1, hydrochloric acid is used as the acid containing no metal elements, and the coagulated fluorinated elastic copolymer is washed with a water-insoluble fluorinated solvent, whereby in the finally obtainable fluorinated elastic copolymer, chloride ions remain substantially. Chloride ions may corrode metal parts of a semiconductor manufacturing apparatus. Therefore, the content of chloride ions in the fluorinated elastic copolymer is desired to be as small as possible.

The present invention is to provide a method for producing a fluorinated elastic copolymer, whereby it is possible to obtain a fluorinated elastic copolymer in which the contents of metal elements and chloride ions are low.

### SOLUTION TO PROBLEM

The present invention is set out in the appended set of claims.

### ADVANTAGEOUS EFFECTS OF INVENTION

The fluorinated elastic copolymer obtained by the method of the present invention has low contents of metal elements and chloride ions. Since it has low contents of metal elements and chloride ions, even when it is used in a semiconductor manufacturing apparatus, it is not only less likely to release metal components which affect semiconductor products, but also less likely to corrode metal parts of the apparatus. Further, since it contains a trace amount of metal elements, when it is made into a fluorinated elastic copolymer composition, dispersibility of the filler will be improved, and at the same time, the cross-linkability will also be improved.

### DESCRIPTION OF EMBODIMENTS

Hereinafter, a compound represented by the formula (1) will be referred to as a compound (1). Compounds represented by other formulae will be referred to in the same manner.

The meanings of the following terms in this specification are as follows.

A "unit based on a monomer" is a generic term for an atomic group to be directly formed by polymerization of one molecule of the monomer, and an atomic group obtainable by chemically converting a part of said atomic group. In this specification, a unit based on a monomer, may simply be referred to also as a monomer unit.

An "acid having no metal elements and no chloride ions" is meant for a compound wherein no metal elements and no chloride ions are present as elements constituting the compound having the property as an acid.

The content of metal elements in a liquid medium is the total value of contents of 29 types of metal elements (Fe, Na, K, Li, Be, Mg, Al, Ca, Ti, V, Cr, Mn, Co, Ni, Cu, Zn, Ga, Rb, Sr, Zr, Mo, Ag, Cd, In, Sn, Cs, Ba, Pb, Bi) measured by the absolute calibration curve method using an inductively coupled plasma mass spectrometer.

The content of chloride ions in a liquid medium is a value measured using an ion chromatography apparatus.

The content of metal elements in a fluorinated elastic copolymer is the total value of contents of 29 types of metal elements (Fe, Na, K, Li, Be, Mg, Al, Ca, Ti, V, Cr, Mn, Co, Ni, Cu, Zn, Ga, Rb, Sr, Zr, Mo, Ag, Cd, In, Sn, Cs, Ba, Pb, Bi) measured by the absolute calibration curve method using an inductively coupled plasma mass spectrometer, with respect to a liquid obtained by putting the fluorinated elastic copolymer in a platinum crucible and ashing it in a high temperature electrically heated furnace, followed by sulfuric acid white fume treatment, and then by dissolution in dilute nitric acid.

The content of anions in a fluorinated elastic copolymer is a value measured using an ion chromatography apparatus, with respect to a solution obtained by adding ultrapure water to CF₃(CF₂)₅H (hereinafter referred to as C6H) having the fluorinated elastic copolymer dissolved therein, followed by stirring, and then by removal the C6H layer, and filtration through a filter.

### <Fluorinated elastic copolymer>

The content of metal elements in the fluorinated elastic copolymer obtained by the method of the present invention is at most 20.0 ppm by mass, preferably at most 10.0 ppm by mass, more preferably at most 5.0 ppm by mass. When the content of metal elements is at most the upper limit value in the above range, in a case where a crosslinked rubber article made of the fluorinated elastic copolymer is used as a sealing material for a semiconductor manufacturing apparatus, it is possible to sufficiently suppress the release of metal components which affect semiconductor products. The lower limit value for the content of metal elements is 0.3 ppm by mass. When the content of metal elements is at least the lower limit value in the above range, at the time when a cross-linking agent is added to obtain a fluorinated elastic copolymer composition, not only crosslinkability will be better, but also dispersibility of a filler or reinforcing material will be improved.

The content of chloride ions in the fluorinated elastic copolymer obtained by the method of the present invention is at most 1 ppm by mass, preferably at most 0.5 ppm by mass. When the content of chloride ions is at most the upper limit value in the above range, in a case where a crosslinked rubber article made of the fluorinated elastic copolymer is used as a sealing material for a semiconductor manufacturing apparatus, it is possible to sufficiently suppress the release of chloride ions which affect the semiconductor manufacturing apparatus. The lower limit value for the content of chloride ions is 0 ppm by mass.

The fluorinated elastic copolymer may be a vinylidene fluoride/hexafluoropropylene type copolymer (FKM), a vinylidene fluoride/tetrafluoroethylene/hexafluoropropylene type copolymer, a vinylidene fluoride/chlorotrifluoroethylene type copolymer, a tetrafluoroethylene/propylene type copolymer (FEPM), a tetrafluoroethylene/propylene/vinylidene fluoride type copolymer, a hexafluoropropylene/ethylene type copolymer, a tetrafluoroethylene/perfluoro(alkyl vinyl ether) type copolymer (FFKM), a vinylidene fluoride/tetrafluoroethylene/perfluoro (alkyl vinyl ether) type copolymer.

As the fluorinated elastic copolymer, from the viewpoint of heat resistance, chemical resistance, oil resistance, weather resistance, FEPM and FFKM are preferred, and from the viewpoint of excellency in chemical resistance, solvent resistance, heat resistance, and being suitable as a sealing material for a semiconductor manufacturing apparatus, FFKM, i.e. the following fluorinated elastic copolymer X, is particularly preferred.

The fluorinated elastic copolymer X has units (hereinafter referred to also as TFE units) based on tetrafluoroethylene (hereinafter referred to also as TFE) and units (hereinafter referred to also as PAVE units) based on the later-described compound (1).

From the viewpoint of an excellent low temperature property when made into a crosslinked rubber article, the fluorinated elastic copolymer X may further have units (hereinafter referred to also as POAVE units) based on the later-described compound (2).

From the viewpoint of a more excellent rubber physical properties when made into a crosslinked rubber article, the fluorinated elastic copolymer X may further have units (hereinafter referred to also as DVE units) based on a fluorinated monomer having at least two polymerizable unsaturated bonds.

The fluorinated elastic copolymer X may further have units (hereinafter referred to also as other units) based on other monomers, as the case requires, within a range not to impair the effects of the present invention.

PAVE units are units based on a compound (1).

CF₂=CFOR^{f1} (1)

wherein R^{f1} is a C₁₋₁₀ perfluoroalkyl group.

In R^{f1}, the perfluoroalkyl group may be linear or may be branched. The number of carbon atoms in R^{f1} is, from the viewpoint of improving the productivity of the fluorinated elastic copolymer X, preferably from 1 to 5, more preferably from 1 to 3.

As specific examples of the compound (1), the following ones may be mentioned. Here, the expressions after the formulae are abbreviations for the compounds.

CF₂=CFOCF₃: PMVE

CF₂=CFOCF₂CF₃: PEVE

CF₂=CFOCF₂CF₂CF₃: PPVE

CF₂=CFOCF₂CF₂CF₂CF₃

As the compound (1), from such a viewpoint that the productivity of the fluorinated elastic copolymer X can be improved, PMVE, PEVE or PPVE is preferred.

POAVE units are units based on a compound (2).

CF₂=CF(OCF₂CF₂)ₙ-(OCF₂)ₘ-OR^{f2} (2)

wherein R^{f2} is a C₁₋₄ perfluoroalkyl group, n is an integer of from 0 to 3, m is an integer of from 0 to 4, and n+m is an integer of from 1 to 7.

In R^{f2}, the perfluoroalkyl group may be linear or may be branched. The number of carbon atoms in R^{f2} is preferably from 1 to 3.

When n is 0, m is preferably 3 or 4.

When n is 1, m is preferably an integer of from 2 to 4.

When n is 2 or 3, m is preferably 0.

n is preferably an integer of from 1 to 3.

When the number of carbon atoms in R^{f2}, n and m are within the above ranges, the low temperature property at the time when the fluorinated elastic copolymer X is made into a crosslinked rubber article will be further excellent, and also the productivity of the fluorinated elastic copolymer X will be improved.

As specific examples of the compound (2), the following ones may be mentioned. Here, the expressions after the formulae are abbreviations for the compounds.

CF₂=CF-OCF₂CF₂-OCF₂-OCF₂-OCF₂-OCF₂-OCF₃: C9PEVE

CF₂=CF-OCF₂CF₂-OCF₂-OCF₂-OCF₃: C7PEVE

CF₂=CF-OCF₂CF₂-OCF₂CF₂-OCF₂CF₃: EEAVE

CF₂=CF-OCF₂-OCF₃

CF₂=CF-OCF₂-OCF₂-OCF₃

As the compound (2), C9PEVE, C7PEVE or EEAVE is preferred from such a viewpoint that when the fluorinated elastic copolymer X is made into a crosslinked rubber article, the low temperature property will be more excellent, and the productivity of the fluorinated elastic copolymer X will be improved.

DVE units are units based on a fluorinated monomer having at least two polymerizable unsaturated bonds.

As the polymerizable unsaturated bond, a double bond (C=C) or a triple bond (C ≡ C) between carbon atom-carbon atom, may be mentioned, and a double bond is preferred. The number of the polymerizable unsaturated bonds is preferably from 2 to 6, more preferably 2 or 3, particularly preferably 2.

The fluorinated monomer having at least two polymerizable unsaturated bonds is preferably a perfluoro compound.

As the fluorinated monomer having at least two polymerizable unsaturated bonds, a compound (3) is preferred, from such a viewpoint that the low temperature property will be more excellent while maintaining rubber physical properties when the fluorinated elastic copolymer is made into a crosslinked rubber article.

CF₂=CFOR^{f3}OCF=CF₂ (3)

wherein R^{f3} is a C₁₋₂₅ perfluoroalkylene group or a group having at least one etheric oxygen atom between carbon-carbon atoms of a C₂₋₂₅ perfluoroalkylene group.

In R^{f3}, the perfluoroalkylene group may be linear or may be branched. The number of carbon atoms in R^{f3} is preferably 3 or 4, from such a viewpoint that the low temperature property will be further excellent while maintaining the rubber physical properties when the fluorinated elastic copolymer X is made into a crosslinked rubber article.

As specific examples of the compound (3), the following ones may be mentioned. Here, the expressions after the formulae are abbreviations for the compounds.

CF₂=CFO(CF₂)₂OCF=CF₂

CF₂=CFO(CF₂)₃OCF=CF₂: C3DVE

CF₂=CFO(CF₂)₄OCF=CF₂: C4DVE

CF₂=CFO(CF₂)₆OCF=CF₂

CF₂=CFO(CF₂)₈OCF=CF₂

CF₂=CFO(CF₂)₂OCF(CF₃)CF₂OCF=CF₂

CF₂=CFO(CF₂)₂O(CF(CF₃)CF₂O)₂CF=CF₂

CF₂=CFOCF₂O(CF₂CF₂O)₂CF=CF₂

CF₂=CFO(CF₂O)₃O(CF(CF₃)CF₂O)₂CF=CF₂

CF₂=CFOCF₂CF(CF₃)O(CF₂)₂OCF(CF₃)CF₂OCF=CF₂

CF₂=CFOCF₂CF₂O(CF₂O)₂CF₂CF₂OCF=CF₂

As the compound (3), C3DVE or C4DVE is particularly preferred from such a viewpoint that the low temperature property is further excellent, while maintaining the rubber physical properties when the fluorinated elastic copolymer X is formed into a crosslinked rubber article.

Other units are units based on other monomers (i.e. monomers other than TFE, the compound (1), the compound (2) and the compound (3)).

Other monomers may be a monomer having a fluorine atom and a halogen atom other than a fluorine atom (such as bromotrifluoroethylene, iodotrifluoroethylene), a monomer having a fluorine atom and a nitrile group (such as CF₂=CFO(CF₂)₅CN, perfluoro(8-cyano-5-methyl-3,6-dioxa-1-octene)).

The molar ratio of TFE units to PAVE units (TFE units/PAVE units) is preferably from 35/65 to 75/25, more preferably from 40/60 to 75/25, further preferably from 50/50 to 75/25.

The proportion of TFE units in all units (100 mol%) constituting the fluorinated elastic copolymer X, is preferably from 35 to 75 mol%, more preferably from 40 to 75 mol%, further preferably from 55 to 75 mol%.

The proportion of PAVE units in all units (100 mol%) constituting the fluorinated elastic copolymer X, is preferably from 3 to 57 mol%, more preferably from 5 to 50 mol%, further preferably from 10 to 40 mol%.

The proportion of POAVE units in all units (100 mol%) constituting the fluorinated elastic copolymer X, is preferably from 0 to 57 mol%, more preferably from 0 to 40 mol%, further preferably from 0 to 30 mol%.

The proportion of DVE units in all units (100 mol%) constituting the fluorinated elastic copolymer X, is preferably from 0 to 1 mol%, more preferably from 0 to 0.5 mol%, further preferably from 0 to 0.3 mol%.

The proportion of other units in all units (100 mol%) constituting the fluorinated elastic copolymer X, is preferably from 0 to 5 mol%, more preferably from 0 to 3 mol%, further preferably from 0 to 2 mol%.

The fluorinated elastic copolymer obtained by the method of the present invention preferably further has an iodine atom, from such a viewpoint that the crosslinkability of the fluorinated elastic copolymer will be excellent, and the rubber physical properties of a crosslinked rubber article will be further excellent. The iodine atom is preferably bonded to a terminal of the polymer chain of the fluorinated elastic copolymer. Here, a terminal of the polymer chain is a concept including both of a terminal of the main chain and a terminal of a branched chain.

The content of iodine atoms in the fluorinated elastic copolymer (100 mass%) is preferably from 0.01 to 1.5 mass%, more preferably from 0.01 to 1.0 mass%. When the content of iodine atoms is within the above range, the crosslinkability of the fluorinated elastic copolymer will be further excellent, and the rubber physical properties of the crosslinked rubber article will be further excellent.

### (Advantageous effects)

In the fluorinated elastic copolymer obtained by the method of the present invention as described above, the content of metal elements is at most 20 ppm by mass, and the content of chloride ions is at most 1 ppm by mass, and thus the contents of metal elements and chloride ions are low. Therefore, a crosslinked rubber article made of the fluorinated elastic copolymer obtained by the method of the present invention is suitable as a sealing material for a semiconductor manufacturing apparatus.

### <Method for producing fluorinated elastic copolymer>

The method for producing a fluorinated elastic copolymer of the present invention, is a method which comprises coagulating a fluorinated elastic copolymer in a latex containing the fluorinated elastic copolymer, by using a specific acid; and washing the coagulated fluorinated elastic copolymer with a specific liquid medium.

The latex containing the fluorinated elastic copolymer is obtainable by an emulsion polymerization method.

In the emulsion polymerization method, for example, in an aqueous medium containing a radical polymerization initiator and an emulsifier, the monomer components including TFE and the compound (1) are polymerized.

As the radical polymerization initiator, a known one may be used.

As the radical polymerization initiator to be used in the emulsion polymerization method, preferred is a water-soluble initiator. The water-soluble initiator may be a persulfate (ammonium persulfate, sodium persulfate, potassium persulfate), hydrogen peroxide, a water-soluble organic peroxide (disuccinic acid peroxide, diglutaric acid peroxide, tert-butyl hydroxyperoxide), an organic initiator (azobisisobutylamidine dihydrochloride), a redox initiator made of a combination of a persulfate or hydrogen peroxide, and a reducing agent such as sodium hydrogen bisulfite or sodium thiosulfate, an inorganic initiator of a system having a small amount of iron, ferrous salt, or silver sulfate permitted to further coexist with a redox initiator.

The amount of the radical polymerization initiator is preferably from 0.0001 to 5 parts by mass, more preferably from 0.001 to 2 parts by mass, to 100 parts by mass of the monomer components.

In the case of using a radical polymerization initiator, it is preferred to polymerize the monomer components in the presence of a chain transfer agent.

The chain transfer agent may be an alcohol (methanol, ethanol), a chlorofluorohydrocarbon (1,3-dichloro-1,1,2,2,3-pentafluoropropane, 1,1-dichloro-1-fluoroethane), a hydrocarbon (pentane, hexane, cyclohexane), a compound (4), a compound (5), a mercaptan (tert-dodecyl mercaptan, n-octadecyl mercaptan).

R^{f4}I₂ (4)

R^{f4}IBr (5)

wherein R^{f4} is a C₁₋₁₆ polyfluoroalkylene group.

In R^{f4}, the polyfluoroalkylene group may be linear or may be branched. As R^{f4}, a perfluoroalkylene group is preferred.

As the chain transfer agent, the compound (4) is preferred, from such a viewpoint that crosslinkability of the fluorinated elastic copolymer will be excellent, and the rubber physical properties of the crosslinked rubber article will be further excellent.

The compound (4) may be 1,4-diiodo perfluorobutane, 1,6-diiodo perfluorohexane, 1,8-diiodo perfluorooctane, and from the viewpoint of excellent polymerizability, 1,4-diiodo perfluorobutane is preferred.

The amount of the chain transfer agent is suitably set based on the chain transfer constant of the chain transfer agent. In the case of using the compound (4), it is preferably from 0.01 to 5 mass%, more preferably from 0.05 to 2 mass%, to 100 parts by mass of the monomer components.

As the aqueous medium, water, a mixture of water and a water-soluble organic solvent may be mentioned.

The water-soluble organic solvent may be tert-butanol, propylene glycol, dipropylene glycol, dipropylene glycol monomethyl ether, tripropylene glycol, and from such a viewpoint that the polymerization rate of the monomers is less likely to be lowered, tert-butanol or dipropylene glycol monomethyl ether is preferred.

When the aqueous medium contains a water-soluble organic solvent, dispersibility of the monomers and dispersibility of the fluorinated elastic copolymer will be excellent, and the productivity of the fluorinated elastic copolymer will be excellent.

The content of the water-soluble organic solvent is preferably from 1 to 40 parts by mass, more preferably from 3 to 30 parts by mass, to 100 parts by mass of water.

The emulsifier may be an anionic emulsifier, a nonionic emulsifier, a cationic emulsifier, and from such a viewpoint that mechanical and chemical stability of the latex will be further excellent, an anionic emulsifier is preferred.

The anionic emulsifier may be a hydrocarbon type emulsifier (sodium lauryl sulfate, sodium dodecylbenzene sulfonate), a fluorinated emulsifier (ammonium perfluorooctanoate, sodium perfluorooctanoate, ammonium perfluorohexanoate, a compound (6)).

F(CF₂)ₚO(CF(X)CF₂O)_{q}CF(Y)COOA (6)

wherein X and Y are each a fluorine atom or a C₁₋₃ linear or branched perfluoroalkyl group, A is a hydrogen atom, an alkali metal or NH₄, p is an integer of from 2 to 10, and q is an integer of from 0 to 3.

As the compound (6), the following may be mentioned.

C₂F₅OCF₂CF₂OCF₂COONH₄

F(CF₂)₃O(CF(CF₃)CF₂O)₂CF(CF₃)COONH₄

F(CF₂)₃OCF₂CF₂OCF₂COONH₄

F(CF₂)₃O(CF₂CF₂O)₂CF₂COONH₄

F(CF₂)₄OCF₂CF₂OCF₂COONH₄

F(CF₂)₄O(CF₂CF₂O)₂CF₂COONH₄

F(CF₂)₃OCF₂CF₂OCF₂COONa

F(CF₂)₃O(CF₂CF₂O)₂CF₂COONa

F(CF₂)₄OCF₂CF₂OCF₂COONa

F(CF₂)₄O(CF₂CF₂O)₂CF₂COONa

F(CF₂)₂OCF₂CF₂OCF₂COONH₄

F(CF₂)₂O(CF₂CF₂O)₂CF₂COONH₄

F(CF₂)₂OCF₂CF₂OCF₂COONa

F(CF₂)₂O(CF₂CF₂O)₂CF₂COONa

The anionic emulsifier is preferably ammonium perfluorooctanoate, C₂F₅OCF₂CF₂OCF₂COONH₄, F(CF₂)₄OCF₂CF₂OCF₂COONH₄, or F(CF₂)₃OCF₂CF₂OCF₂COONH₄.

The amount of the emulsifier is preferably from 0.01 to 15 parts by mass, more preferably from 0.1 to 10 parts by mass, to 100 parts by mass of the aqueous medium.

The polymerization conditions for the radical polymerization are suitably selected depending on the monomer composition and the decomposition temperature of the radical polymerization initiator.

The polymerization pressure is preferably from 0.1 to 20 MPa [gauge], more preferably from 0.3 to 10 MPa [gauge], further preferably from 0.3 to 5 MPa [gauge].

The polymerization temperature is preferably from 0 to 100°C, more preferably from 10 to 90°C, further preferably from 20 to 80°C.

The polymerization time is preferably from 1 to 72 hours, more preferably from 1 to 24 hours, further preferably from 1 to 12 hours.

As compounds (monomer components, a polymerization initiator, an emulsifier, a chain transfer agent, a pH adjusting agent, but excluding the aqueous medium) to be used in the emulsion polymerization, it is preferred not to use a compound having metal elements or a compound having chloride ions, whereby it is easy to obtain a fluorinated elastic copolymer having low contents of metal elements and chloride ions.

The aqueous medium to be used for the emulsion polymerization, preferably has a content of metal elements of at most 2.0 ppm by mass and a content of chloride ions of at most 1 ppm by mass, from such a viewpoint that it is thereby easy to obtain a fluorinated elastic copolymer having low contents of metal elements and chloride ions. The content of metal elements is more preferably at most 1.0 ppm by mass, further preferably at most 0.5 ppm by mass. The content of chloride ions is preferably at most 0.5 ppm by mass. The lower limit value for the content of chloride ions is 0 ppm by mass, and the lower limit value for the content of metal elements is 0 ppb by mass. As the aqueous medium, ultrapure water is particularly preferred.

The fluorinated elastic copolymer is separated from the latex by coagulation with an acid.

As the acid to be used for the coagulation treatment, an acid having no metal elements and no chloride ions, is used, from the viewpoint of obtaining a fluorinated elastic copolymer having low contents of metal elements and chloride ions.

As the acid having no metal elements and no chloride ions, nitric acid, sulfuric acid, oxalic acid, hydrofluoric acid may be mentioned. As the acid having no metal elements and no chloride ions, from the viewpoint of lower corrosiveness to metals, nitric acid and sulfuric acid are preferred, and from such a viewpoint that the amount of anions derived from the acid, remaining in the finally obtainable fluorinated elastic copolymer, is small, and it is less likely to lower the rubber physical properties of the crosslinked rubber article, nitric acid is particularly preferred.

The coagulation treatment with an acid is carried out by mixing a latex containing a fluorinated elastic copolymer and an aqueous solution (hereinafter referred to also as an acid aqueous solution) containing an acid.

The concentration of the acid in the acid aqueous solution is from 0.1 to 50 mass%, preferably from 1 to 30 mass%, more preferably from 1 to 10 mass%. When the concentration of the acid is at least the lower limit value in the above range, the fluorinated elastic copolymer tends to be readily coagulated. When the concentration of the acid is at most the upper limit value in the above range, corrosion of metal equipments (a coagulation tank, a washing tank, a dryer) to be used in the production of the fluorinated elastic copolymer, will be suppressed, and further, the amount of anions derived from the acid, remaining in the finally obtainable fluorinated elastic copolymer, tends to be less, whereby it is less likely to lower the rubber physical properties of the crosslinked rubber article.

In water to be employed in the preparation of the aqueous acid solution, from such a viewpoint that it is thereby easy to obtain a fluorinated elastic copolymer having low contents of metal elements and chloride ions, the content of the metal elements is at most 2.0 ppm by mass, and the content of chloride ions is at most 1 ppm by mass. The content of metal elements is preferably at most 1.0 ppm by mass, more preferably at most 0.5 ppm by mass. The content of chloride ions is preferably at most 0.5 ppm by mass. The lower limit value for the content of chloride ions is 0 ppm by mass, and the lower limit value for the content of metal elements is 0 ppb by mass. As water, ultrapure water is particularly preferred.

The amount of the acid aqueous solution is preferably at least 10 parts by mass, more preferably from 50 to 1,000 parts by mass, further preferably from 100 to 500 parts by mass, to 100 parts by mass of the fluorinated elastic copolymer. When the amount of the acid aqueous solution is at least the lower limit value in the above range, the fluorinated elastic copolymer tends to be readily coagulated. When the amount of the acid aqueous solution is at most the upper limit value in the above range, the amount of wastewater generated by the coagulation treatment will be suppressed.

The coagulated fluorinated elastic copolymer is recovered by filtration, and then washed with a liquid medium.

As the liquid medium to be used for washing, from the viewpoint of obtaining a fluorinated elastic copolymer having low contents of metal elements and chloride ions, one in which the content of metal elements is at most 2.0 ppm by mass and the content of chloride ions is at most 2 ppm by mass is used. The content of metal elements is preferably at most 1.0 ppm by mass, more preferably at most 0.5 ppm by mass. The content of chloride ions is preferably at most 1 ppm by mass, more preferably at most 0.5 ppm by mass. The lower limit value for the content of chloride ions is 0 ppm by mass, and the lower limit value for the content of metal elements is 0 ppb by mass.

Water is used as the liquid medium for washing to easily remove metal elements and chloride ions from the fluorinated elastic copolymer, and ultrapure water is preferred.

The washed fluorinated elastic copolymer is recovered by filtration. The number of washing may be once or may be two or more times.

The total amount of the liquid medium to be used for washing is at least 10 parts by mass, preferably from 50 to 1,000 parts by mass, more preferably from 100 to 500 parts by mass, to 100 parts by mass of the fluorinated elastic copolymer. When the total amount of the liquid medium is at least the lower limit value in the above range, the amount of anions derived from the acid, remaining in the fluorinated elastic copolymer, tends to be small, corrosion of a dryer in the subsequent step will be suppressed, and it will be less likely to lower the rubber physical properties of the crosslinked rubber article. When the total amount of the liquid medium is at most the upper limit value in the above range, the amount of wastewater generated by the washing can be suppressed.

The washed fluorinated elastic copolymer is preferably dried under reduced pressure (vacuum dried) at a temperature of lower than 100°C, from the viewpoint of suppressing deterioration of the fluorinated elastic copolymer by heat, and suppressing a decrease in rubber physical properties of the crosslinked rubber article.

The drying temperature is preferably at most 80°C, more preferably at most 70°C, further preferably at most 60°C. The drying temperature is the temperature of the atmosphere in the dryer.

The pressure at the time of the drying is preferably at most 50 kPa, more preferably at most 30 kPa, further preferably at most 10 kPa. By making the pressure at the time of the drying to be at most the upper limit value in the above range, it is possible to sufficiently dry the fluorinated elastic copolymer even when the drying temperature is made to be low.

The content of metal elements in the fluorinated elastic copolymer after drying is at most 20.0 ppm by mass, preferably at most 10.0 ppm by mass, more preferably at most 5.0 ppm by mass. When the content of metal elements is at most the upper limit value in the above range, it is possible to sufficiently suppress the release of metal components which affect semiconductor products, at the time when a crosslinked rubber article made of the fluorinated elastic copolymer is used as a sealing material for a semiconductor manufacturing apparatus. The lower limit value for the content of metal elements is 0.3 ppm by mass. When the content of metal elements is at least the lower limit value in the above range, the crosslinkability of the fluorinated elastic copolymer will be further excellent, and dispersibility of a filler or reinforcing material will also be improved.

The content of chloride ions in the fluorinated elastic copolymer after drying is at most 1 ppm by mass, preferably at most 0.5 ppm by mass. When the content of chloride ions is at most the upper limit value in the above range, it is possible to sufficiently suppress the release of chloride ions which affect a semiconductor manufacturing apparatus, at the time when a crosslinked rubber article made of the fluorinated elastic copolymer is used as a sealing material for the semiconductor manufacturing apparatus. The lower limit value for the content of chloride ions is 0 ppm by mass.

The content of anions derived from the acid in the fluorinated elastic copolymer after drying, is preferably at most 20 ppm by mass, more preferably at most 15 ppm by mass, further preferably at most 10 ppm by mass. When the content of anions derived from the acid is at most the upper limit value in the above range, it is possible to sufficiently suppress the release of anions which affect a semiconductor manufacturing apparatus at the time when a crosslinked rubber article made of the fluorinated elastic copolymer is used as a sealing material for the semiconductor manufacturing apparatus. The lower limit value for the content of anions derived from the acid is 0 ppm by mass.

### (Advantageous effects)

In the method for producing a fluorinated elastic copolymer of the present invention as described above, it is possible to obtain a fluorinated elastic copolymer having low contents of metal elements and chloride ions, since the fluorinated elastic copolymer in the latex is coagulated by using an acid having no metal elements and no chloride ions, and the coagulated fluorinated elastic copolymer is washed with a liquid medium having a content of metal elements of at most 2.0 ppm by mass and a content of chloride ions of at most 2 ppm by mass.

Further, since the content of chloride ions in the fluorinated elastic copolymer after washing is small, the corrosion of a dryer in a subsequent step will be suppressed.

### <Fluorinated elastic copolymer composition>

The fluorinated elastic copolymer composition comprises a fluorinated elastic copolymer obtained by the method of the present invention, and a crosslinking agent. It may contain a crosslinking aid, other additives, as the case requires, within a range not to impair the effects of the present disclosure.

As the crosslinking agent, an organic peroxide, a polyol, an amine, a triazine, may be mentioned, and from the viewpoint of excellent productivity, heat resistance, and chemical resistance of the crosslinked rubber article, an organic peroxide is preferred.

As the organic peroxide, a dialkyl peroxide (di-tert-butyl peroxide, tert-butyl cumyl peroxide, dicumyl peroxide, α,α-bis(tert-butylperoxy)-p-diisopropylbenzene, 2,5-dimethyl-2,5-di(tert-butylperoxy)hexane, 2,5-dimethyl-2,5-di(tert-butylperoxy)hexane-3), 1,1-di(tert-butylperoxy)-3,3,5-trimethylcyclohexane, 2,5-dimethylhexane-2,5-dihydroperoxide, benzoyl peroxide, tert-butylperoxy benzene, 1,3-bis(tert-butylperoxy isopropyl)benzene, 2,5-dimethyl-2,5-di(benzoyl peroxy)hexane, tert-butylperoxy maleic acid, tert-butylperoxy isopropyl carbonate, may be mentioned. As the organic peroxide, a dialkyl peroxide is preferred.

The blend amount of the crosslinking agent is preferably from 0.3 to 10 parts by mass, more preferably from 0.3 to 5 parts by mass, further preferably from 0.5 to 3 parts by mass, to 100 parts by mass of the fluorinated elastic copolymer. When the blend amount of the crosslinking agent is within the above range, the crosslinked rubber article will be excellent in balance of the strength and the elongation.

When the fluorinated elastic copolymer composition further contains a crosslinking aid, crosslinking efficiency becomes higher.

The crosslinking aid may be triallyl cyanurate, triallyl isocyanurate, trimethallyl isocyanurate, 1,3,5-triacryloylhexahydro-1,3,5-triazine, triallyl trimellitate, m-phenylenediamine bismaleimide, p-quinone dioxime, p,p'-dibenzoyl quinone dioxime, dipropargyl terephthalate, diallyl phthalate, N,N',N",N"'-tetraallyl terephthalamide, a vinyl group-containing siloxane oligomer (polymethylvinylsiloxane, polymethyl phenyl vinyl siloxane). As the crosslinking aid, triallyl cyanurate, triallyl isocyanurate or trimethallyl isocyanurate is preferred, and triallyl isocyanurate is particularly preferred.

The blend amount of the crosslinking aid is preferably from 0.1 to 10 parts by mass, more preferably from 0.5 to 5 parts by mass, to 100 parts by mass of the fluorinated elastic copolymer. When the blend amount of the crosslinking aid falls within the above range, the crosslinked rubber article will be excellent in balance of the strength and the elongation.

Other additives may be a metal oxide, a pigment, a filler, a reinforcing material, a processing aid.

In a case where the fluorinated elastic copolymer composition further contain a metal oxide, the crosslinking reaction will proceed promptly and reliably.

As the metal oxide, an oxide of a divalent metal, such as magnesium oxide, calcium oxide, zinc oxide or lead oxide, may be mentioned.

The blend amount of the metal oxide is preferably from 0.1 to 10 parts by mass, more preferably from 0.5 to 5 parts by mass, to 100 parts by mass of the fluorinated elastic copolymer. When the blend amount of the metal oxide is within the above range, the crosslinked rubber article will be excellent in balance of the strength and the elongation.

The filler or reinforcing material may be carbon black, titanium oxide, silicon dioxide, clay, talc, polytetrafluoroethylene, polyvinylidene fluoride, polyvinyl fluoride, polychlorotrifluoroethylene, a TFE/ethylene copolymer, a TFE/propylene copolymer, a TFE/vinylidene fluoride copolymer.

The processing aid may be a known one. As a processing aid which shows the function as a lubricant, a fatty acid metal salt (sodium stearate, calcium stearate), a synthetic wax (polyethylene wax), a fatty acid ester (glycerol monooleate) may be mentioned.

The fluorinated elastic copolymer composition is obtainable by kneading the fluorinated elastic copolymer and the crosslinking agent, and, as the case requires, the crosslinking aid and other additives, by a kneading method using a known kneading apparatus such as twin rolls, a kneader, a Banbury mixer.

### <Crosslinked rubber article>

The crosslinked rubber article is one having the fluorinated elastic copolymer or fluorinated elastic copolymer composition described above crosslinked.

As the crosslinked rubber article, a crosslinked rubber sheet, an O-ring, a sheet gasket, an oil seal, a diaphragm, a V-ring, a component for a semiconductor manufacturing apparatus, a chemically resistant sealant, a coating material, a wire covering material may be mentioned.

The crosslinked rubber article can be suitably used as a component for a semiconductor manufacturing apparatus, since the content of metal elements is low.

The component for a semiconductor manufacturing apparatus may be a sealing material (an O-ring, a square ring, a gasket, a packing, an oil seal, a bearing seal, a lip seal), a tube, a hose, various rubber rolls, a diaphragm, a lining.

The semiconductor manufacturing apparatus may be an etching apparatus (a dry etching apparatus, a plasma etching apparatus, a reactive ion etching apparatus, a reactive ion beam etching apparatus, a sputtering etching apparatus, an ion beam etching apparatus, a wet etching apparatus, an ashing apparatus), a cleaning apparatus (a dry etching cleaning device, a UV/O₃ cleaning device, an ion beam cleaning device, a laser beam cleaning device, a plasma cleaning device, a gas etching cleaning device, an extraction cleaning device, a Soxhlet extractive cleaning device, a high temperature and high pressure extractive cleaning device, a microwave extraction cleaning device, a supercritical extractive cleaning device), an exposure apparatus (a stepper, a coater-developer), a polishing apparatus (CMP apparatus), a film deposition apparatus (CVD apparatus, a sputtering apparatus), a diffusion and ion injection apparatus (an oxidation diffusion device, an ion injection apparatus).

### (Method of producing crosslinked rubber article)

The crosslinked rubber article is obtainable by suitably molding and crosslinking the fluorinated elastic copolymer or fluorinated elastic copolymer composition described above by a known method.

As the crosslinking method, a method by heating, or a method by irradiation of ionizing radiation may be mentioned.

As the molding method, an injection molding method, an extrusion molding method, a coextrusion molding method, a blow molding method, a compression molding method, an inflation molding method, a transfer molding method, a calendar molding method may be mentioned.

In a case where the fluorinated elastic copolymer composition contains an organic peroxide as a crosslinking agent, crosslinking by heating is preferred.

As a specific production method for a crosslinked rubber article by heat crosslinking, for example, a hot press molding method may be mentioned. In the hot press molding method, by using a heated mold, and filling and heating the fluorinated elastic copolymer composition in the mold cavity having a desired shape, crosslinking (hot press crosslinking) is carried out simultaneously with molding, to obtain a crosslinked rubber article. The heating temperature is preferably from 130 to 220°C, more preferably from 140 to 200°C, further preferably from 150 to 180°C.

In the case of using a hot press molding method, it is also preferred that a crosslinked rubber article obtained by hot press crosslinking (referred to also as primary crosslinking) may further be heated, as the case requires, by e.g. an oven using electricity, hot air, or steam, as the heat source, to let the crosslinking be progressed (referred to also as secondary crosslinking). The temperature during the secondary crosslinking is preferably from 150 to 280°C, more preferably from 180 to 260°C, further preferably from 200 to 250°C. The secondary crosslinking time is preferably from 1 to 48 hours, more preferably from 4 to 24 hours. By sufficiently carrying out the secondary crosslinking, rubber physical properties of the crosslinked rubber article will be improved. Further, the residue of the peroxide contained in the crosslinked rubber article will be decomposed and volatilized, and thus will be reduced. The hot press molding method is preferably applied to the molding of a sealing material.

As the ionizing radiation in the method by irradiation of ionizing radiation, electron beams, gamma rays may be mentioned. In the case of crosslinking by irradiation of ionizing radiation, a method is preferred wherein, in advance, the fluorinated elastic copolymer or fluorinated elastic copolymer composition is molded into a desired shape, and then ionizing radiation is irradiated to carry out crosslinking. The molding method may be a method wherein a suspension solution having the fluorinated elastic copolymer or fluorinated elastic copolymer composition dissolved and dispersed in a suitable solvent, is applied and dried to form a coating film, or a method wherein the fluorinated elastic copolymer or fluorinated elastic copolymer composition is extrusion-molded into a shape of a hose or electric wire. The irradiance level of ionizing radiation is suitably set, and is preferably from 1 to 300 kGy, more preferably from 10 to 200 kGy.

### EXAMPLES

In the following, the present invention will be described in more detail with reference to Examples, but the present invention is not limited to these Examples.

Ex. 1 to 3 are Examples of the present invention, and Ex. 4 to 6 are Comparative Examples.

### <Measurements, evaluations>

The proportions of the respective units in a fluorinated elastic copolymer were obtained from the ¹⁹F-NMR analysis, the fluorine content analysis, and the infrared absorption spectrum analysis.

The content of iodine atoms in a fluorinated elastic copolymer was quantified by an apparatus having an automatic sample combustion device (a pretreatment device for ion chromatograph) (manufactured by Dia Instruments Co., Ltd., AQF-100) and an ion chromatograph combined.

The content of metal elements in ultrapure water was obtained by totaling contents of 29 types of metal elements (Fe, Na, K, Li, Be, Mg, Al, Ca, Ti, V, Cr, Mn, Co, Ni, Cu, Zn, Ga, Rb, Sr, Zr, Mo, Ag, Cd, In, Sn, Cs, Ba, Pb and Bi) measured by an absolute calibration curve method using an inductively coupled plasma mass spectrometer (manufactured by Agilent Technologies, Inc., ICP-MS 7500cs).

The content of chloride ions in ultrapure water was measured by using an ion chromatography apparatus (manufactured by Thermo Fisher Scientific, ICS-3000).

The content of metal elements in a fluorinated elastic copolymer was obtained by totaling contents of 29 types of metal elements (Fe, Na, K, Li, Be, Mg, Al, Ca, Ti, V, Cr, Mn, Co, Ni, Cu, Zn, Ga, Rb, Sr, Zr, Mo, Ag, Cd, In, Sn, Cs, Ba, Pb and Bi) measured by an absolute calibration curve method using an inductively coupled plasma mass spectrometer (manufactured by Agilent Technologies Inc., ICP-MS 7500cs), with respect to a liquid obtained by putting the fluorinated elastic copolymer in a platinum crucible and ashing it in a high temperature electrically heated furnace, followed by sulfuric acid white fume treatment and dissolution in dilute nitric acid.

The content of metal elements in a fluorinated elastic copolymer-containing molded product was obtained by totaling contents of 29 types of metal elements (Fe, Na, K, Li, Be, Mg, Al, Ca, Ti, V, Cr, Mn, Co, Ni, Cu, Zn, Ga, Rb, Sr, Zr, Mo, Ag, Cd, In, Sn, Cs, Ba, Pb and Bi) measured by an absolute calibration curve method using an inductively coupled plasma mass spectrometer (manufactured by Agilent Technologies, Inc., ICP-MS 7500cs), with respect to a liquid obtained by immersing a fluorinated elastic copolymer-containing O-ring in 100 mL of 3.4% hydrochloric acid at room temperature for 24 hours.

The content of anions in a fluorinated elastic copolymer was measured by using an ion chromatography apparatus (manufactured by Thermo Fisher Scientific, ICS-3000) with respect to a solution obtained by adding ultrapure water to C6H having the fluorinated elastic copolymer dissolved therein, followed by stirring, and then removing the C6H layer, followed by filtration through a filter.

### <Production of fluorinated elastic copolymer>

### (Ex. 1)

As ultrapure water, one having a content of metal elements of 0.1 ppm by mass and a content of chloride ions of at most 0.1 ppm by mass (at most the lower limit of quantitation) was prepared.

After degassing a stainless steel pressure reactor having an inner volume of 2100 mL and provided with an anchor blade, 804 g of ultrapure water, 80.1 g of a 30 mass% solution of C₂F₅OCF₂CF₂OCF₂COONH₄, 1.8 g of a 5 mass% aqueous solution of disodium hydrogen phosphate-12-hydrate, and 0.87 g of 1,4-diiodo perfluorobutane were charged, and the gas phase was replaced with nitrogen. While stirring at a speed of 600 rpm by using an anchor blade, after the inner temperature became 80°C, 13 g of TFE and 65 g of PMVE were injected into the vessel. The internal pressure of the reactor was 0.90 MPa [gauge]. 20 mL of a 1 mass% aqueous solution of ammonium persulfate was added to initiate polymerization. The addition ratio of monomers injected before initiation of the polymerization (hereinafter referred to as the initial monomers) was TFE:PMVE = 25:75 as represented by molar ratio.

With the progress of the polymerization, the internal pressure of the reactor decreased, and when it decreased to 0.89 MPa [gauge], TFE was injected to raise the internal pressure of the reactor to 0.90 MPa [gauge]. This operation was repeated, and every time when 8 g of TFE was injected, 7 g of PMVE was also injected.

When the total addition mass of TFE became 80 g, addition of the monomers to be injected after initiation of the polymerization (hereinafter referred to as "post-addition monomers") was terminated, and the internal temperature of the reactor was cooled to 10°C, to stop the polymerization reaction and to obtain a latex containing a fluorinated elastic copolymer. The polymerization time was 180 minutes. The total addition masses of the post-addition monomers were TFE being 80 g and PMVE being 63 g, and when converted to a molar ratio, TFE:PMVE = 65:35.

Nitric acid (manufactured by Kanto Chemical Co., Inc., special grade) was dissolved in ultrapure water to prepare a 3 mass% aqueous solution of nitric acid. The latex was added to the nitric acid aqueous solution in a container made of a TFE/perfluoro(alkyl vinyl ether) copolymer (PFA), to coagulate the fluorinated elastic copolymer. The amount of the nitric acid aqueous solution was 150 parts by mass, to 100 parts by mass of the fluorinated elastic copolymer in the latex.

The coagulated fluorinated elastic copolymer was recovered by filtration, put in ultrapure water in a PFA vessel and washed by stirring at 200 rpm for 30 minutes. The amount of ultrapure water was 100 parts by mass, to 100 parts by mass of the fluorinated elastic copolymer.

The washed fluorinated elastic copolymer was recovered by filtration, and dried under reduced pressure at 60°C and at 10 kPa, to obtain a white fluorinated elastic copolymer. The proportions of the respective monomers in the fluorinated elastic copolymer were TFE:PMVE = 66:34, and the content of iodine atoms was 0.15 mass%. The content of metal elements and the content of anions in the fluorinated elastic copolymer are shown in Table 1.

### (Ex. 2)

Concentrated sulfuric acid (manufactured by Kanto Chemical Co., Inc., special grade) was dissolved in ultrapure water to prepare a 5 mass% aqueous solution of sulfuric acid. Except that the sulfuric acid aqueous solution was used instead of the nitric acid aqueous solution for coagulation treatment, the coagulation treatment, washing and drying were carried out in the same manner as in Ex. 1, to obtain a fluorinated elastic copolymer. The content of metal elements and the content of anions in the fluorinated elastic copolymer are shown in Table 1.

### (Ex. 3)

Oxalic acid (manufactured by Wako Pure Chemical Industries, Ltd., Wako special grade) was dissolved in ultrapure water to prepare a 10 mass% aqueous solution of oxalic acid. Except that the oxalic acid aqueous solution was used instead of the nitric acid aqueous solution for coagulation treatment, the coagulation treatment, washing and drying were carried out in the same manner as Ex. 1, to obtain a fluorinated elastic copolymer. The content of metal elements and the content of anions in the fluorinated elastic copolymer are shown in Table 1.

### (Ex. 4)

Hydrochloric acid (manufactured by Kanto Chemical Co., Inc., special grade) was dissolved in ultrapure water to prepare a 2 mass% aqueous solution of hydrochloric acid. Except that the hydrochloric acid aqueous solution was used instead of the nitric acid aqueous solution for coagulation treatment, the coagulation treatment, washing and drying were carried out in the same manner as in Ex. 1, to obtain a fluorinated elastic copolymer. The content of metal elements and the content of anions in the fluorinated elastic copolymer are shown in Table 1.

### (Ex. 5)

A fluorinated elastic copolymer was obtained in the same manner as in Ex. 4, except that the washed fluorinated elastic copolymer was dried at 150°C at atmospheric pressure. The content of metal elements and the content of anions in the fluorinated elastic copolymer are shown in Table 1.

**[Table 1]**

| | Coagulation | | Drying | Fluorinated elastic copolymer | | | | |
|---|---|---|---|---|---|---|---|---|
| | Acid | Concentration | Conditions | Anions (ppm by mass) | | | | Metal elements |
| | | (mass%) | | Cl⁻ | NO₃⁻ | SO₄²⁻ | (COO)₂²⁻ | (ppm by mass) |
| Ex. 1 | Nitric acid | 3 | Reduced pressure/60°C | ND | 7 | ND | ND | 1.0 |
| Ex. 2 | Sulfuric acid | 5 | Reduced pressure/60°C | ND | ND | 140 | ND | 1.0 |
| Ex. 3 | Oxalic acid | 10 | Reduced pressure/60°C | ND | ND | ND | 180 | 0.8 |
| Ex. 4 | Hydrochloric acid | 2 | Reduced pressure/60°C | 4 | ND | ND | ND | 1.1 |
| Ex. 5 | Hydrochloric acid | 2 | Atmospheric pressure/150°C | 7 | ND | ND | ND | 1.2 |

Here, in Table 1, ND denotes undetected. Further, the lower limit of quantitation of anions is 0.1 ppm by mass, and the lower limit of quantitation of metal elements is 1 ppb by mass.

In Ex. 1 to 3, hydrochloric acid was not used in the coagulation treatment, whereby the content of chloride ions in the fluorinated elastic copolymer was at most the lower limit of quantitation (at most 0.1 ppm by mass).

In Ex. 4 and 5, hydrochloric acid was used in the coagulation treatment, whereby the content of chloride ions in the fluorinated elastic copolymer exceeded 3 ppm by mass.

### <Production of fluorinated elastic copolymer composition>

100 parts by mass of the fluorinated elastic copolymer in Ex. 1, 15 parts by mass of carbon black, 3 parts by mass of triallyl isocyanurate, 1 part by mass of 2,5-dimethyl-2,5-di(tert-butylperoxy)hexane (manufactured by NOF Corporation, Perhexa (registered trademark) 25B) and 1 part by mass of calcium stearate, were kneaded by twin rolls, to obtain a fluorinated elastic copolymer composition in Ex. 1.

With respect to the fluorinated elastic copolymer composition in Ex. 1, evaluation of crosslinkability was carried out by using a crosslinking property measuring apparatus (manufactured by Alpha Technology Co., Ltd., RPA), whereby good crosslinking was confirmed.

### (Ex. 6)

In Ex. 1, the coagulated fluorinated elastic copolymer was recovered by filtration, and in the following manner, washing with an acid aqueous solution and washing with ultrapure water were carried out.

The recovered fluorinated elastic copolymer was put in a previously prepared aqueous acid (a 0.5 mass% aqueous solution of nitric acid) and washed by stirring at 200 rpm for 30 minutes. The amount of the acid aqueous solution was 150 parts by mass to 100 parts by mass of the fluorinated elastic copolymer. This washing was repeated three times.

Thereafter, it was added to ultrapure water in a PFA vessel and washed by stirring at 200 rpm for 30 minutes. The amount of ultrapure water was 100 parts by mass to 100 parts by mass of the fluorinated elastic copolymer. This washing was repeated seven times.

The washed fluorinated elastic copolymer was recovered by filtration and dried under reduce pressure at 50°C at 10 kPa, to obtain a white fluorinated elastic copolymer. The composition of the fluorinated elastic copolymer was the same as in Ex. 1. The content of metal elements in the fluorinated elastic copolymer was 0.2 ppm.

With respect to the obtained fluorinated elastic copolymer, a fluorinated elastic copolymer composition was prepared in the same manner as in Ex. 1. At that time, dispersibility of the filler to the polymer was low as compared to in Ex. 1, and it took time for the operation.

With respect to the above fluorinated elastic copolymer composition, evaluation of crosslinkability was carried out by using a crosslinking property measuring apparatus (manufactured by Alpha Technology Co., Ltd., RPA), whereby although crosslinking was progressed, crosslinkability was low as compared to in Ex. 1.

### INDUSTRIAL APPLICABILITY

The fluorinated elastic copolymer obtained by the method of the present invention can be used in ordinary rubber products. It is also applicable to corrosion-resistant rubber coating materials, anti-urea grease sealing materials, rubber coating materials, adhesive rubbers, hoses, tubes, calendar sheets (rolls), sponges, rubber rolls, oil drilling members, heat dissipation sheets, solution crosslinked products, rubber sponges, bearing seals (anti-urea grease), lining (chemical resistant products), automotive insulation sheets, insulating sheets for electronic apparatus, rubber bands for watches, endoscopic packing (amine resistant), bellows hoses (processing from calendar sheets) water heater packing/valve, fenders (marine civil engineering, marine), fibers, nonwoven fabric (protective clothing), base sealants, rubber gloves, uniaxial eccentric screw pump stator, components for urea SCR system, anti-vibration agents, vibration controlling agents, sealing agents, additives to other materials, and applications to toys. Further, in particular, since the contents of metal elements and chloride ions are low, it can be suitably used as a sealing material for a semiconductor manufacturing apparatus.

## Claims

1. A method for producing a fluorinated elastic copolymer, which comprises coagulating a fluorinated elastic copolymer in a latex containing the fluorinated elastic copolymer by using an acid having no metal elements and no chloride ions,
wherein a coagulation treatment is carried out by mixing the latex and an acid aqueous solution,
a concentration of the acid in the acid aqueous solution is from 0.1 to 50 mass%, and
the content of metal elements in water to be employed in the preparation of the aqueous acid solution is from 0 ppb to 2.0 ppm by mass and the content of chloride ion is from 0 to 1 ppm by mass,
recovering a coagulated fluorinated elastic copolymer by filtration; and
washing the coagulated fluorinated elastic copolymer with a liquid medium having a content of metal elements from 0 ppb to 2.0 ppm by mass, and a content of chloride ions from 0 to 2 ppm by mass,
wherein the total amount of the liquid medium to be used for washing is at least 10 parts by mass, to 100 parts by mass of the fluorinated elastic copolymer,
wherein the liquid medium used for washing is water, and
in the fluorinated elastic copolymer after washing and drying, the content of metal elements is from 0.3 to 20.0 ppm by mass, and the content of chloride ions is at most 1 ppm by mass,
wherein the content of metal elements and the content of chloride ions are measured according to the description.

2. The method for producing a fluorinated elastic copolymer according to Claim 1, wherein said acid is nitric acid.

3. The method for producing a fluorinated elastic copolymer according to Claims 1 or 2, wherein the fluorinated elastic copolymer after washing is dried under reduced pressure at a temperature of lower than 100°C.

4. The method for producing a fluorinated elastic copolymer according to any one of Claims 1 to 3, wherein in the fluorinated elastic copolymer after washing and drying, the content of anions derived from the acid is at most 20.0 ppm by mass
wherein the content of anions is measured according to the description.

5. The method for producing a fluorinated elastic copolymer according to any one of Claims 1 to 4, wherein the fluorinated elastic copolymer is a fluorinated elastic copolymer having units based on tetrafluoroethylene, and units based on a compound represented by the following formula (1),
CF₂=CFOR^{f1} (1)
wherein R^{f1} is a C₁₋₁₀ perfluoroalkyl group.

## Patentansprüche

1. Verfahren zur Herstellung eines fluorierten elastischen Copolymers, umfassend das Koagulieren eines fluorierten elastischen Copolymers in einem Latex, enthaltend das fluorierte elastische Copolymer, unter Verwendung einer Säure ohne Metallelemente und ohne Chloridionen,
wobei eine Koagulationsbehandlung durch Mischen des Latex und einer wässrigen Säurelösung durchgeführt wird,
eine Konzentration der Säure in der wässrigen Säurelösung von 0,1 bis 50 Massen-% beträgt und
der Gehalt an Metallelementen in dem zur Herstellung der wässrigen Säurelösung zu verwendenden Wasser von 0 ppb bis 2,0 ppm, bezogen auf die Masse, beträgt und der Gehalt an Chloridionen von 0 bis 1 ppm, bezogen auf die Masse, beträgt,
das Rückgewinnen des koagulierten fluorierten elastischen Copolymers durch Filtration; und
das Waschen des koagulierten fluorierten elastischen Copolymers mit einem flüssigen Medium mit einem Gehalt an Metallelementen von 0 ppb bis 2,0 ppm, bezogen auf die Masse, und einem Gehalt an Chloridionen von 0 bis 2 ppm, bezogen auf die Masse,
wobei die Gesamtmenge des zum Waschen zu verwendenden flüssigen Mediums mindestens 10 Massenteile pro 100 Massenteile des fluorierten elastischen Copolymers beträgt,
wobei das zum Waschen zu verwendende flüssige Medium Wasser ist, und
wobei in dem fluorierten elastischen Copolymer nach dem Waschen und Trocknen der Gehalt an Metallelementen von 0,3 bis 20,0 ppm, bezogen auf die Masse, beträgt und der Gehalt an Chloridionen höchstens 1 ppm, bezogen auf die Masse, beträgt,
wobei der Gehalt an Metallelementen und der Gehalt an Chloridionen nach der Beschreibung gemessen werden.

2. Verfahren zur Herstellung eines fluorierten elastischen Copolymers nach Anspruch 1, wobei die Säure Salpetersäure ist.

3. Verfahren zur Herstellung eines fluorierten elastischen Copolymers nach Anspruch 1 oder 2, wobei das fluorierte elastische Copolymer nach dem Waschen unter reduziertem Druck bei einer Temperatur von weniger als 100°C getrocknet wird.

4. Verfahren zur Herstellung eines fluorierten elastischen Copolymers nach einem der Ansprüche 1 bis 3, wobei in dem fluorierten elastischen Copolymer nach dem Waschen und Trocknen der Gehalt an Anionen, die von der Säure stammen, höchstens 20,0 ppm, bezogen auf die Masse, beträgt
wobei der Gehalt an Anionen nach der Beschreibung gemessen wird.

5. Verfahren zur Herstellung eines fluorierten elastischen Copolymers nach einem der Ansprüche 1 bis 4, wobei das fluorierte elastische Copolymer ein fluoriertes elastisches Copolymer mit Einheiten auf Basis von Tetrafluorethylen und Einheiten auf Basis einer Verbindung der folgenden Formel (1) ist
CF₂=CFOR^{f1} (1)
wobei R^{f1} eine C₁₋₁₀-Perfluoralkylgruppe ist.

## Revendications

1. Procédé de production d'un copolymère élastique fluoré, qui comprend faire coaguler un copolymère élastique fluoré dans un latex contenant le copolymère élastique fluoré en utilisant un acide n'ayant aucun élément métallique et aucun ion chlorure,
dans lequel un traitement de coagulation est réalisé en mélangeant le latex et une solution aqueuse acide,
une concentration de l'acide dans la solution aqueuse acide va de 0,1 à 50 % en masse, et
la teneur en éléments métalliques dans de l'eau devant être employés dans la préparation de la solution acide aqueuse va de 0 ppb à 2,0 ppm en masse et la teneur en ion chlorure va de 0 à 1 ppm en masse,
récupérer un copolymère élastique fluoré coagulé par filtration ; et
laver le copolymère élastique fluoré coagulé avec un milieu liquide ayant une teneur en éléments métalliques allant de 0 ppb à 2,0 ppm en masse et une teneur en ions chlorure allant de 0 à 2 ppm en masse,
dans lequel la quantité totale du milieu liquide devant être utilisé pour le lavage est d'au moins 10 parties en masse sur 100 parties en masse du copolymère élastique fluoré,
dans lequel le milieu liquide utilisé pour le lavage est de l'eau, et
dans le copolymère élastique fluoré après lavage et séchage, la teneur en éléments métalliques va de 0,3 à 20,0 ppm en masse et la teneur en ions chlorure est d'au plus 1 ppm en masse,
dans lequel la teneur en éléments métalliques et la teneur en ions chlorure sont mesurées conformément à la description.

2. Procédé de production d'un copolymère élastique fluoré selon la revendication 1, dans lequel ledit acide est l'acide nitrique.

3. Procédé de production d'un copolymère élastique fluoré selon la revendication 1 ou 2, dans lequel le copolymère élastique fluoré après lavage est séché sous pression réduite à une température inférieure à 100 °C.

4. Procédé de production d'un copolymère élastique fluoré selon l'une quelconque des revendications 1 à 3, dans lequel dans le copolymère élastique fluoré après lavage et séchage, la teneur en anions dérivés de l'acide est d'au plus 20,0 ppm en masse,
dans lequel la teneur en anions est mesurée conformément à la description.

5. Procédé de production d'un copolymère élastique fluoré selon l'une quelconque des revendications 1 à 4, dans lequel le copolymère élastique fluoré est un copolymère élastique fluoré ayant des unités basées sur du tétrafluoroéthylène et des unités basées sur un composé représenté par la formule suivante (1),
CF₂=CFOR^{f1} (1)
dans laquelle R^{f1} est un groupe perfluoroalkyle en C₁₋₁₀.
